# EUROPEAN PATENT APPLICATION

(11) **EP 4 702 901 A1**
(43) Date of publication of application: **04.03.2026**
(21) Application number: 24382941.3
(22) Date of filing: 02.09.2024
(51) Int. Cl.: A47L 1/02, H02S 40/10

(54) **GLASS CLEANING ROBOT**

(71) Applicant: Smarttek Devices, S.L., 15300 Betanzos - A Coruña (ES)
(72) Inventor: Sanguiñedo Fernández, José Manuel, 15300 Betanzos - A Coruña (ES); Ruiz Pérez, José Manuel, 15300 Betanzos - A Coruña (ES)
(74) Representative: Clarke, Modet y Cía., S.L.

(57) **Abstract**

Glass cleaning robot, that comprises a first independent glass cleaning robot (1), a second independent glass cleaning robot (2), and a central system configured to precisely coordinate the actions of the two independent glass cleaning robots transforming them into a single, more efficient operating entity, such the central system comprises a first linear actuator (5) attached to the first independent glass cleaning robot, a second linear actuator (6) attached to the second independent glass cleaning robot, and a third linear actuator (7) attached at one end to the first linear actuator (5) and at the other end to the second linear actuator (6), where the third linear actuator (7) is perpendicular to the first linear actuator (5) and to the second linear actuator (6).

## Description

### Field of Invention

The present invention relates to a glass cleaning robot that provides the possibility of cleaning large glass surfaces that contain a small separation between the glasses making up the surface or even to glass contained in a frame. The glass cleaning robot object of the invention is applicable in the field of cleaning, precisely in the industry of cleaning glass surfaces.

### Background to the invention

Robot glass cleaning systems are automated solutions designed to clean windows, facades, and other glass surfaces. These systems are increasingly popular in both residential and commercial settings due to their efficiency, safety, and ability to reach difficult areas. Here's an overview of how they work, their benefits, and some notable examples:
The work of a robot glass cleaning system is based in a suction Mechanism used adhere to vertical surfaces such that powerful vacuum pumps create a seal that allows the robot to stick to the glass while it moves.

These robots usually comprise sensors and algorithms that enable the robots to navigate and clean efficiently, the robot can detect edges to avoid falling and use path planning to cover the entire surface without missing spots.

The cleaning mechanism typically involves microfiber pads or brushes combined with cleaning solutions, such that these pads can rotate, vibrate, or move in a pattern to scrub the glass.

The robots are powered either by rechargeable batteries or through a direct power supply.

The benefits of using this kind of robots are related to safety since these robots eliminate the need for ladders or scaffolding, reducing the risk of falls and injuries for human cleaners; robot cleaners can work continuously without breaks, ensuring consistent and thorough cleaning increasing the efficiency of the cleaning process; robots can access high and difficult-to-reach windows, being ideal for tall buildings and skyscrapers.

The applications of this kind of robot are, for example:
- residential buildings: Ideal for homeowners with large windows or glass doors, especially in multi-story houses.
- commercial buildings: used in office buildings, shopping malls, and hotels to maintain clean and clear windows.
- public infrastructure: suitable for cleaning glass surfaces in airports, train stations, and other public buildings.
- industrial settings: used in factories and warehouses with large glass surfaces,
- glazed roofs,
- solar panels for domestic use,
- etc.

### Description of the invention

It is the object of the invention a glass cleaning robot that comprises a first independent glass cleaning robot, a second independent glass cleaning robot, and a central system configured to precisely coordinate the actions of the two independent glass cleaning robots transforming them into a single, more efficient operating entity.

In the glass cleaning robot of the invention each independent glass cleaning robot comprises a top housing that in turn comprises anchoring means to facilitate the anchoring of the central system to each of the individual robot.

In the glass cleaning robot of the invention the central system comprises a first linear actuator attached to the first independent glass cleaning robot, a second linear actuator attached to the second independent glass cleaning robot, and a third linear actuator attached at one end to the first linear actuator and at the other end to the second linear actuator, where the third linear actuator is perpendicular to the first linear actuator and to the second linear actuator.

In the glass cleaning robot of the invention each independent glass cleaning robot comprises suction means to clean the glass and transport means to move along the glass to be cleaned.

### Brief description of the figures

To complement the description that will be made below and in order to help a better understanding of the characteristics of the invention, this description is accompanied by a set of drawings based on which the innovations and advantages of the object of the invention will be more easily understood.

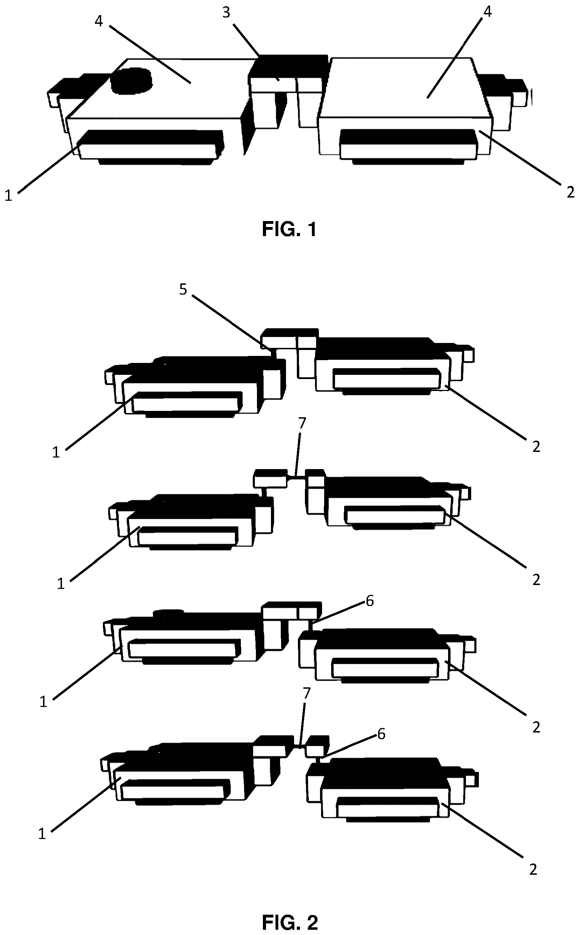

Figure 1 shows a perspective view of the glass cleaning robot object of the invention.
Figure 2 shows a view of the sequence of the glass cleaning robot object of the invention for overcoming a discontinuity.

The numerical references used in the figures are:
1. first independent glass cleaning robot,
2. second independent glass cleaning robot,
3. central system,
4. top housing,
5. first linear actuator,
6. second linear actuator, and
7. third linear actuator.

### Preferential performance of the invention

The object of the invention is a glass cleaning robot that comprises a first independent glass cleaning robot (1) and a second independent glass cleaning robot (2), with a central system (3) configured to precisely coordinate the actions of the two independent glass cleaning robots (1, 2) transforming them into a single, more efficient operating entity.

The central system (3) is configured to act as a coordinator, synchronizing the movements and operations of the two independent glass cleaning robots (1, 2).

The central system (3) ensures that the independent glass cleaning robots (1, 2) operate in perfect harmony, moving and cleaning as if they were a single device through algorithms and integrated communications.

This coordination approach allows for more effective and faster cleaning of glass surfaces, without the need to significantly modify the basic functions or structure of existing robots.

Each independent glass cleaning robot (1, 2) comprises suction means, and transport means to clean the glass and to move along the glass to be cleaned.

The independent glass cleaning robots (1, 2) comprise a (4) that in turn comprises anchoring means to facilitate the anchoring of the central system (3) to each of the independent glass cleaning robots (1, 2).

The central system of the robot comprises three linear actuators, a first linear actuator (5) attached to the first independent glass cleaning robot (1), a second linear actuator (6) attached to the second independent glass cleaning robot (2) and a third linear actuator (7) attached at one end to the first linear actuator (5) and at the other end to the second linear actuator (6), with the third linear actuator (7) perpendicular to the first linear actuator (5) and to the second linear actuator (6).

With this configuration, when the glass cleaning robot of the invention reaches a discontinuity between two glasses to be cleaned or a frame of any glass, the first linear actuator (5) extends and raises the second independent glass cleaning robot, when the second independent glass cleaning robot is separated of the glass, the third linear actuator extends and moves the second independent glass cleaning robot beyond the discontinuity or the frame of any glass, at that moment the first linear actuator (5) retracts and the second independent glass cleaning robot (2) contacts the glass beyond the discontinuity or the frame of any glass, the third linear actuator (7) retracts and moves the first independent glass cleaning robot (1) beyond the discontinuity or the frame of any glass, such that both independent glass cleaning robot (1, 2) are in contact with the glass to be cleaned having overcome a discontinuity in the surface to be cleaned or the frame of any glass.

If the extension of the third linear actuator is not enough to place the second independent glass cleaning robot (2) beyond the discontinuity or to overcome the frame of any glass, the transport means of the first independent glass cleaning robot (1) moves said first independent glass cleaning robot (1) dragging the second independent glass cleaning robot (2) until overcoming the discontinuity or the frame of any glass.

This modular and adaptable design allows the system to be used with different models of window cleaning robots, also enabling future updates and improvements, adding new functionalities.

Overall, this project marks a breakthrough in the efficiency of automated window cleaning, by uniting and coordinating two independent robotic units into an integrated, harmonized system. This integration not only improves coverage and reduces cleaning time, but also opens up new possibilities in the development and improvement of cleaning robotics.

## Claims

1. Glass cleaning robot, **characterized in that** it comprises:
- a first independent glass cleaning robot (1),
- a second independent glass cleaning robot (2), and
- a central system configured to precisely coordinate the actions of the two independent glass cleaning robots transforming them into a single operating entity.

2. Glass cleaning robot according to claim 1, **characterized in that** each independent glass cleaning robot (1, 2) comprises a top housing (4) that in turn comprises anchoring means to facilitate the anchoring of the central system (3) to each of the independent glass cleaning robot (1, 2).

3. Glass cleaning robot according to any of claims 1 to 2, **characterized in that** the central system comprises:
- a first linear actuator (5) attached to the first independent glass cleaning robot,
- a second linear actuator (6) attached to the second independent glass cleaning robot, and
- a third linear actuator (7) attached at one end to the first linear actuator (5) and at the other end to the second linear actuator (6),
where the third linear actuator (7) is perpendicular to the first linear actuator (5) and to the second linear actuator (6).

4. Glass cleaning robot according to any of claims 1 to 3, **characterized in that** each independent glass cleaning robot (1, 2) comprises suction means to clean the glass and transport means to move along the glass to be cleaned.
